# EUROPÄISCHE PATENTSCHRIFT

(11) **EP 1 984 606 B1**
(45) Veröffentlichungstag und Bekanntmachung des Hinweises auf die Patenterteilung: **11.08.2010**
(21) Anmeldenummer: 07722821.1
(22) Anmeldetag: 15.02.2007
(51) Int. Cl.: F01N 3/20, B01D 53/86

(54) **DOSIERVORRICHTUNG UND VERFAHREN ZUM BETRIEB DERSELBEN**
METERING APPARATUS AND METHOD FOR OPERATING IT
DISPOSITIF DE DOSAGE ET PROCEDE POUR SON UTILISATION

(30) Priorität: 18.02.2006 DE 102006007658
(43) Veröffentlichungstag der Anmeldung: 29.10.2008
(73) Patentinhaber: Daimler AG, 70327 Stuttgart (DE)
(72) Erfinder: BECK, Gerhard, 73779 Deizisau (DE); BECKER, Steffen, 76187 Karlsruhe (DE); ESPEY, Christoph, 73730 Esslingen (DE); HERMANN, Thomas, 35466 Rabenau (DE); KNORR, Slawa, 71543 Wüstenrot (DE); MARQUARDT, Klaus-Jürgen, 73655 Plüderhausen (DE); MEYER, Rafael, 71263 Weil der Stadt (DE)
(74) Vertreter: JENSEN & SON
(86) Internationale Anmeldenummer: PCT/EP2007/001307
(87) Internationale Veröffentlichungsnummer: WO 2007/093410

(56) Entgegenhaltungen:
- EP-A1- 0 303 560
- EP-A1- 0 562 866
- JP-A- 2 265 619
- JP-A- 9 290 134
- JP-A- 2006 046 287
- US-A- 5 894 728

## Beschreibung

Die vorliegende Erfindung betrifft eine Dosiervorrichtung zur dosierten Abgabe eines ersten Mediums in eine Abgasanlage einer Brennkraftmaschine mit einer Konditioniervorrichtung, der das erste Medium und ein zweites Medium zuführbar sind, und mit einer Abgabevorrichtung, die mit der Konditioniervorrichtung verbunden ist und über die das erste Medium und/oder das zweite Medium in die Abgasanlage einleitbar sind, wobei durch das zweite Medium eine Reinigung der Konditioniervorrichtung und/oder der Abgabevorrichtung von Bestandteilen des ersten Mediums ermöglicht ist. Die Erfindung betrifft ferner ein Verfahren zum Betrieb einer Dosiervorrichtung.

Aus der DE 102 23 766 A1 ist ein Verfahren bekannt, bei dem eine Harnstofflösung zur Abgasnachbehandlung über eine Spritzdüse bedarfsweise in eine Abgasströmung eines Kraftfahrzeug-Dieselmotors eingebracht wird. Zur Reinigung der Spritzdüse wird sofort nach einer Harnstoffdosierung eine Reinigungsflüssigkeit durch die Spritzdüse geleitet.

Aus der DE 101 50 518 Cl ist ein Verfahren zur Abgasnachbehandlung bei einer Brennkraftmaschine bekannt, bei dem ein flüssiges Reduktionsmittel aus einem Vorratsbehälter bedarfsweise über eine Reduktionsmittelleitung und ein Dosierventil einer Mischkammer zugeführt und dort einer Gasströmung beigemischt wird. Das Gemisch wird über eine Gemischleitung in eine Abgasleitung eingebracht. Um Beschädigungen an der Vorrichtung durch ein Einfrieren des Reduktionsmittels zu verhindern, wird nach einem Abstellen der Brennkraftmaschine die Zufuhr des Reduktionsmittels unterbrochen und der Mischkammer lediglich Gas zugeführt. Über eine geeignete Ventilschaltung werden die Mischkammer, die Gemischleitung, das Dosierventil und die Reduktionsmittelleitung mit Gas gefüllt und somit vor Beschädigungen bei einem Einfrieren des Reduktionsmittels geschützt.

Aus der DE 102 54 981 A1 ist eine Vorrichtung zur Abgasnachbehandlung bekannt, bei der ein Reduktionsmittel in einem Vorratsbehälter gespeichert ist. Über eine Reduktionsmittelleitung ist das Reduktionsmittel einer Abgasleitung zuführbar. In der Reduktionsmittelleitung ist ein schaltbares Ventilelement angeordnet, über das Druckluft in die Reduktionsmittelleitung einleitbar ist. Das schaltbare Ventilelement ermöglicht dabei eine Durchströmung der Reduktionsmittelleitung mit Druckluft wahlweise in Richtung der Abgasleitung oder in Richtung des Vorratsbehälters. Dadurch ist es möglich, das Reduktionsmittel durch Ausblasen aus der Reduktionsmittelleitung zu entfernen.

Aus der EP 0 562 866 A1 ist eine Dosiervorrichtung zur dosierten Abgabe Lösung eines festen Reduktionsmittels über eine Düse in eine Abgasanlage bekannt, bei welcher zugleich oder auch zeitversetzt zur Dosierung des Reduktionsmittels ferner Luft und Wasser der Abgasanlage zugeführt werden können. Ein Dosierventil dient der Dosierung der Reduktionsmittellösung, wobei durch Zufuhr von Wasser stromab vom Dosierventil die Konzentration der Reduktionsmittellösung vermindert werden kann.

Aus der US 5894 728 A ist eine Dosiervorrichtung zur Abgabe von Reformat als Reduktionsmittel über ein Reduktionsmittelzugabeventil in eine Abgasanlage einer Brennkraftmaschine bekannt. Das Reformat wird auf katalytische Weise durch Kraftstoffreformierung mittels eines Reformer-Katalysators erzeugt. Diesem kann Kraftstoff, Luft, Wasser über entsprechende Steuerventile zugeführt werden. Ferner ist eine Zufuhr von Spülluft vorgesehen, die zum Regenerieren des Reformer-Katalysators von Verkokungsrückständen dient.

Aus der EP 0 303 560 A1 ist eine Dosiervorrichtung zur Abgabe von Ammoniak über ein Ammoniak-Zugabeventil in eine Abgasanlage einer Brennkraftmaschine bekannt. Bereitgestellter Ammoniak kann mittels Zugabe von Luft in einer Verdünnungseinheit verdünnt werden.

Die Dosiervorrichtung ermöglicht außerdem eine Zugabe von Dampf ins Abgas über das Ammoniak-Zugabeventil. Dadurch kann eine Degradation des entsprechenden Denitriersystems in der Abgasanlage rückgängig gemacht bzw. verhindert werden.

Aus der JP 09 290134 A ist eine Dosiervorrichtung zur Dosierung von Harnstofflösung bekannt, bei welcher das entsprechende Leitungssystem gereinigt werden kann. Hierfür wird die Förderung der Harnstofflösung gestoppt und reines Wasser gefördert und damit Harnstoff aus den Leitungen entfernt. Im Anschluss daran werden die Leitungen durch Spülluft gespült und Harnstoff - und Wasserreste aus den Leitungen geblasen und diese getrocknet.

Aus der JP 02 265619 A ist eine Dosiervorrichtung zur dosierten Abgabe eines Reduktionsmittels über eine Düse bekannt. Die Abgabe kann von einer Zufuhr von Druckluft zur Düse unterstützt werden. Bei kleinen Fördermengen des Reduktionsmittels kann zusätzlich Wasser einer Leitung für das Reduktionsmittel zugeführt werden.

Aufgabe der vorliegenden Erfindung ist es, eine Dosiervorrichtung der eingangs genannten Art bereitzustellen, bei der eine einfache und wirksame Reinigung ermöglicht ist. Eine weitere Aufgabe der vorliegenden Erfindung besteht darin, ein Verfahren zum Betrieb einer derartigen Dosiervorrichtung anzugeben, mit dem eine gute Reinigungswirkung erzielt werden kann.

Die Aufgabe wird von einer Dosiervorrichtung mit den Merkmalen des Anspruchs 1 sowie durch ein Verfahren mit den Merkmalen des Anspruchs 5 gelöst.

Die erfindungsgemäße Dosiervorrichtung weist eine Konditioniervorrichtung mit einer Zentralleitung auf, der das erste Medium und ein zweites sowie ein drittes Medium zuführbar sind. Das erste und/oder das zweite Medium sind über eine mit der Konditioniervorrichtung verbundene Abgabevorrichtung in die Abgasanlage einleitbar. Dabei ist durch das zweite und das dritte Medium eine Reinigung der Konditioniervorrichtung und/oder der Abgabevorrichtung von Bestandteilen des ersten Mediums ermöglicht und das dritte Medium unterscheidet sich von dem zweiten Medium in seinen physikalischen Eigenschaften und/oder seiner chemischen Zusammensetzung. Erfindungsgemäß ist in der Zentralleitung der Konditioniervorrichtung ein Dosierelement zur Beeinflussung einer Strömungsgröße eines die Zentralleitung durchströmenden Mediums oder Mediumgemisches angeordnet und die Zufuhr des dritten Mediums ist stromauf des Dosierelements vorgesehen. Ferner ist in der Zentralleitung der Konditioniervorrichtung eine Sensorvorrichtung für eine mit einem Verschmutzungsgrad der Dosiervorrichtung korrelierende Messgröße angeordnet.

Das erste Medium dient dabei bevorzugt als Arbeitsmedium, mit dem eine gewünschte physikalische und/oder chemische Wirkung in der Abgasströmung erzielbar ist, beispielsweise eine Temperierung der Abgasströmung, eine direkte chemische Reaktion mit Komponenten des Abgases oder eine katalytische Wirkung zur Abgasnachbehandlung. Mit dem zweiten Medium und dem dritten Medium stehen zwei unterschiedliche Medien zur Verfügung, um die Konditioniervorrichtung und/oder die Abgabevorrichtung zumindest von Bestandteilen des ersten Mediums zu reinigen. Dabei kann eine Reinigung der Vorrichtung mit Hilfe des zweiten Mediums, des dritten Mediums oder einer beliebigen Kombination aus erstem, zweitem und/oder drittem Medium erfolgen. Ferner kann in der Konditioniereinrichtung eine Gemischbildung aus erstem Medium und einem der anderen Medien vorgesehen sein. Die erfindungsgemäße Dosiervorrichtung ermöglicht es insbesondere, zur Reinigung der Konditioniervorrichtung und/oder der Abgabevorrichtung jeweils das Medium oder das Gemisch zu verwenden, mit dem unter gegebenen Betriebsbedingungen die bestmögliche Wirkung erzielbar ist.

Mit Hilfe des Dosierelements lässt sich eine Strömungsgröße des die Leitung durchströmenden Mediums oder Gemischs beeinflussen, beispielsweise ein Durchsatz oder eine Strömungsgeschwindigkeit. Das Dosierelement kann insbesondere als Ventil, Membranventil, Düse, Diffusor oder Venturi-Düse ausgestaltet sein. Dosierelemente sind besonders anfällig für Verunreinigungen durch das erste Medium. Eine bedarfsgerechte Durchströmung des Dosierelements mit dem dritten Medium ermöglicht es, Verunreinigungen insbesondere in Form von Ablagerungen und Kristallisierungen wirksam zu entfernen.

Eine Zufuhr des dritten Mediums wird bei einer Abweichung der Messgröße der Sensorvorrichtung von einem Referenzwert oder bei Erreichung eines Schwellenwerts aktiviert. Als Messgrößen sind Größen vorgesehen, die Rückschlüsse auf einen Verschmutzungsgrad der Dosiervorrichtung erlauben, zum Beispiel ein Durchsatz oder eine Druckdifferenz. Als Referenzwerte dienen vorzugsweise entsprechende Werte für die Messgröße bei gleichen Betriebsbedingungen und ungestörter Durchströmung. Die Referenzwerte sind bevorzugt abhängig vom Betriebspunkt der Brennkraftmaschine oder der Dosiervorrichtung definiert. Auf diese Weise ist es möglich, das dritte Medium bedarfsgerecht zuzuführen, wenn ein Betriebszustand der Brennkraftmaschine oder der Dosiervorrichtung von einem Referenzzustand abweicht.

In Ausgestaltung der Erfindung ist als zweites Medium Luft und als drittes Medium ein Lösungsmittel vorgesehen, in dem zumindest Bestandteile des ersten Mediums lösbar sind. Damit sind zwei Medien zur Reinigung der Konditioniervorrichtung und/oder der Abgabevorrichtung bereitgestellt, deren Reinigungswirkung jeweils auf unterschiedlichen Wirkmechanismen beruht. Die Zufuhr von Luft ermöglicht es insbesondere, das erste Medium in einfacher Weise durch Ausblasen aus der Vorrichtung zu entfernen. Eventuelle Rückstände des ersten Mediums, die durch Ausblasen nicht entfernbar sind, zum Beispiel Ablagerungen oder Kristallisierungen, lassen sich durch eine Zufuhr des Lösungsmittels auflösen und ausspülen. Als Lösungsmittel kann auch das erste Medium vorgesehen sein.

Das erfindungsgemäße Verfahren zum Betrieb einer Dosiervorrichtung mit einer Konditioniervorrichtung und einer Abgabevorrichtung zeichnet sich dadurch aus, dass die mit dem Verschmutzungsgrad der Dosiervorrichtung korrelierende Messgröße überwacht und bei einer Veränderung gegenüber einem Referenzwert um ein vorgebbares Maß oder bei einer Erreichung eines vorgegebenen Schwellenwertes die Zufuhr des dritten Mediums stromauf des in einer Zentraleitung der Konditioniervorrichtung angeordneten Dosierelements vorgenommen wird. Auf diese Weise ist es möglich, das Dosierelement bei Bedarf mit Hilfe des dritten Mediums zu reinigen. Somit stehen unterschiedliche Medien beziehungsweise Gemische zur Reinigung der Konditioniervorrichtung und/oder der Abgabevorrichtung von Bestandteilen des ersten Mediums zur Verfügung. Durch die Überwachung einer Messgröße und den Vergleich mit einem Referenzwert können insbesondere durch Verunreinigungen verursachte Störungen festgestellt werden, so dass das dritte Medium bedarfsgerecht zugeführt werden kann.

In weiterer Ausgestaltung der Erfindung wird die Zufuhr des zweiten Mediums und die Zufuhr des dritten Mediums abwechselnd innerhalb eines vorgebbaren Zeitraums vorgenommen. Diese Ausgestaltungsform des Verfahrens bietet sich insbesondere für eine präventive Reinigung der Konditioniervorrichtung und/oder der Abgabevorrichtung an, bevor Verunreinigungen in nennenswertem Umfang gebildet sind. Eine solche präventive Reinigung kann beispielsweise unter Niedriglastbedingungen oder nach einem Abstellen der Brennkraftmaschine erfolgen. Durch die abwechselnde Zufuhr des zweiten Mediums und des dritten Mediums ist eine optimale Reinigungswirkung erzielbar.

In weiterer Ausgestaltung der Erfindung ist während der Zufuhr des zweiten Mediums und/oder des dritten Mediums eine Zufuhr des ersten Mediums reduziert. Insbesondere ist dabei die Zufuhr des ersten Mediums vollständig unterbunden. Verunreinigungen durch das erste Medium lassen sich bei einer reduzierten Zufuhr des ersten Mediums besonders effektiv entfernen.

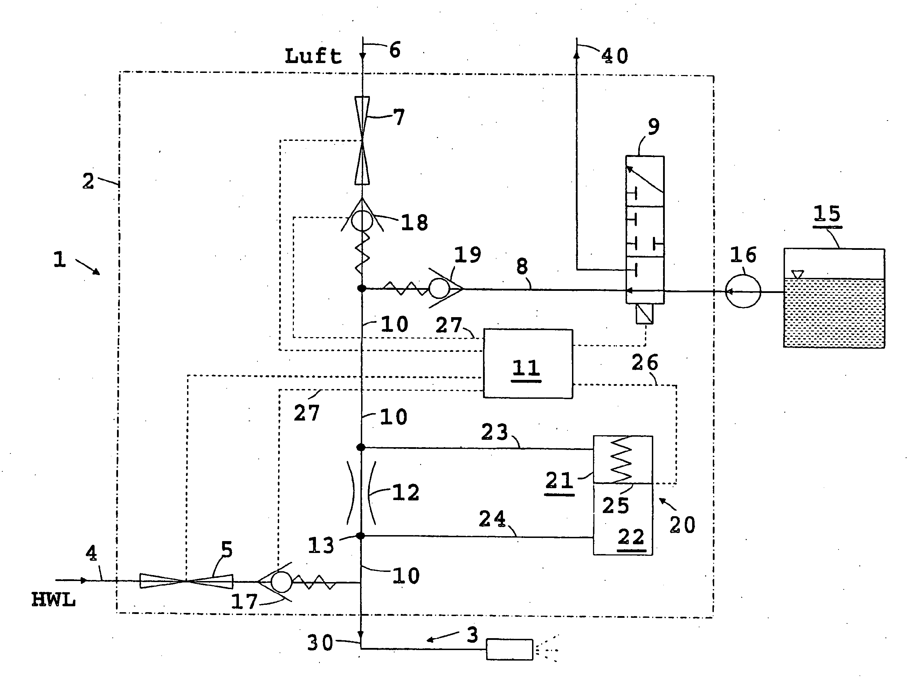

Weitere Merkmale und Merkmalskombinationen ergeben sich aus den Ansprüchen, der Beschreibung und der Zeichnung. Ein konkretes Ausführungsbeispiel der Erfindung ist in der Zeichnung dargestellt und in der nachfolgenden Beschreibung erläutert.

Hierzu zeigt die einzige Figur in einer blockschaltbildartigen Darstellung eine vorteilhafte Ausführungsform der erfindungsgemäßen Dosiervorrichtung.

Eine in der Figur gezeigte Dosiervorrichtung 1 dient zur Abgabe einer Harnstoff-Wasser-Lösung HWL in eine nicht näher dargestellte Abgasanlage einer Brennkraftmaschine. Dabei erfolgt die Abgabe der Harnstoff-Wasser-Lösung bevorzugt stromauf eines so genannten SCR-Katalysators zur Stickoxidreduzierung. Die Dosiervorrichtung 1 ist jedoch nicht auf diese Anwendung beschränkt, sondern lässt sich auch zur Abgabe beliebiger anderer flüssiger oder gasförmiger Medien in eine Abgasanlage verwenden.

Der Dosiervorrichtung 1 ist eine Konditioniervorrichtung 2 zugeordnet, die eine erste Zuleitung 4 für ein erstes Medium, eine zweite Zuleitung 6 für ein zweites Medium und eine dritte Zuleitung 8 für ein drittes Medium umfasst. Als erstes Medium ist dabei die Harnstoff-Wasser-Lösung HWL vorgesehen, als zweites Medium Luft und als drittes Medium ein Lösungsmittel, in dem insbesondere Harnstoff oder Harnstoffverbindungen löslich sind.

Die Harnstoff-Wasser-Lösung HWL ist bevorzugt in einem in der Figur nicht dargestellten Vorratsbehälter bevorratet. Mit Hilfe einer Fördereinheit ist die Harnstoff-Wasser-Lösung HWL dem Vorratsbehälter entnehmbar und über die erste Zuleitung 4 der Konditioniervorrichtung 2 zuführbar. Die Zufuhr der Harnstoff-Wasser-Lösung HWL erfolgt dabei vorzugsweise unter Druck. An ihrem austrittsseitigen Ende ist die erste Zuleitung 4 mit einer nachfolgend noch zu erläuternden Zentralleitung 10 verbunden. In der ersten Zuleitung 4 ist ein erstes Dosierelement 5 angeordnet, über das ein Durchsatz der Harnstoff-Wasser-Lösung HWL einstellbar ist. Vorteilhafterweise ist dabei über das erste Dosierelement 5 auch eine Sperrung der ersten Zuleitung 4 ermöglicht. Ferner ist in der ersten Zuleitung 4 ein federbelastetes erstes Rückschlagventil 17 angeordnet, durch das die Gefahr einer Rückströmung von Medien aus der Zentralleitung 10 in die erste Zuleitung 4 verringert ist. In einem modifizierten Ausführungsbeispiel kann das erste Rückschlagventil 17 in der ersten Zuleitung 4 auch entfallen. Diese Ausgestaltungsform ermöglicht es, bei Bedarf eines der nachfolgend noch näher zu erläuternden Medien Luft oder Lösungsmittel oder eine Kombination aus diesen Medien aus der Zentralleitung gezielt in die erste Zuleitung 4 einzuleiten. Dadurch ist es möglich, Leitungsanteile der ersten Zuleitung 4 zwischen dem Vorratsbehälter der Harnstoff-Wasser-Lösung HWL und der Zentralleitung 10 von Bestandteilen der Harnstoff-Wasser-Lösung HWL zu reinigen.

Über eine in der Figur nicht dargestellte Ansaugvorrichtung lässt sich Luft aus der Umgebung ansaugen und der Konditioniervorrichtung 2 vorzugsweise unter Druck zuführen. An die Ansaugvorrichtung ist die zweite Zuleitung 6 angeschlossen, wobei eintrittsseitig ein Luftfilter zur Reinigung der Umgebungsluft von eventuellen Verunreinigungen vorgesehen sein kann. Die zweite Zuleitung 6 ist an ihrem austrittsseitigen Ende mit der Zentralleitung 10 verbunden. In der zweiten Zuleitung 6 ist ein zweites Dosierelement 7 angeordnet, mit dem ein Luftdurchsatz einstellbar ist. Dabei ist vorzugsweise über das zweite Dosierelement 7 auch eine Sperrung der zweiten Zuleitung 6 ermöglicht. Analog zur ersten Zuleitung 4 ist in der zweiten Zuleitung 6 ein federbelastetes zweites Rückschlagventil 18 angeordnet, durch das die Gefahr einer Rückströmung von Medien aus der Zentralleitung 10 in die zweite Zuleitung 6 reduziert ist. In einem modifizierten Ausführungsbeispiel ist anstelle der Ansaugvorrichtung ein Druckluftspeicher vorgesehen, in dem die der Konditioniervorrichtung 2 zuzuführende Luft bevorratet ist. Diese Ausgestaltungsform zeichnet sich dadurch aus, dass der Konditioniervorrichtung 2 vorab konditionierte, insbesondere gereinigte Luft zuführbar ist.

Das Lösungsmittel ist vorzugsweise in einem Lösungsmittelvorratsbehälter 15 gespeichert. Als Lösungsmittel kann beispielsweise Wasser (ggf. mit Tensiden versetzt) oder ein Wasser-Alkohol-Gemisch vorgesehen sein. Mit Hilfe einer Fördereinheit in Form einer Pumpe 16 ist das Lösungsmittel dem Lösungsmittelvorratsbehälter 15 entnehmbar und über die dritte Zuleitung 8 der Konditioniervorrichtung 2 zuführbar. Die Zufuhr des Lösungsmittels erfolgt dabei bevorzugt unter Druck. An ihrem austrittsseitigen Ende ist die dritte Zuleitung 8 mit der Zentralleitung 10 verbunden. In der dritten Zuleitung 8 ist ein drittes Dosierelement 9 angeordnet, über das ein Lösungsmitteldurchsatz einstellbar ist. Dabei ist vorzugsweise über das dritte Dosierelement 9 auch eine Sperrung der dritten Zuleitung 8 ermöglicht. In der dritten Zuleitung 8 ist ferner ein federbelastetes drittes Rückschlagventil 19 angeordnet, durch das die Gefahr einer Rückströmung von Medien aus der Zentralleitung 10 in die dritte Zuleitung 8 reduziert ist.

Über eine Zentralleitung 10 sind die erste Zuleitung 4, die zweite Zuleitung 6 und die dritte Zuleitung 8 mit einer nachfolgend noch zu erläuternden Abgabevorrichtung 3 verbunden. In der Zentralleitung 10 ist stromauf einer Einmündungsstelle 13 der ersten Zuleitung 4 ein viertes Dosierelement in Form einer Venturi-Düse 12 angeordnet. Die Venturi-Düse 12 bewirkt bei einer Durchströmung mit einem Medium, insbesondere Luft, eine Steigerung der Strömungsgeschwindigkeit an ihrem engsten Querschnitt. Durch die Venturi-Düse 12 ist gewährleistet, dass Leitungsteile stromauf der Venturi-Düse 12 bei einer Einleitung der Harnstoff-Wasser-Lösung HWL in die von Luft durchströmte Zentralleitung 10 weitgehend frei von Bestandteilen der Harnstoff-Wasser-Lösung HWL bleiben.

Neben der Venturi-Düse 12 ist eine Sensorvorrichtung in Form eines Drucksensors 20 angeordnet. Mit Hilfe des Drucksensors 20 ist eine Druckdifferenz zwischen dem eintrittseitigen Ende und dem austrittseitigen Ende der Venturi-Düse 12 messbar. Eine im Vergleich zu einem Referenzwert erhöhte Druckdifferenz über die Venturi-Düse 12 hinweg kann auf eine Verschmutzung oder Verstopfung der Düse hindeuten. Der Drucksensor 20 ist als Zylinder mit einer ersten Kammer 21 und einer zweiten Kammer 22 ausgestaltet (vgl. Figur). Die erste Kammer 21 ist dabei üben ein erstes Verbindungsrohr 23 mit der Zentralleitung 10 stromauf der Venturi-Düse 12 verbunden. Die zweite Kammer 22 ist über ein zweites Verbindungsrohr 24 mit der Zentralleitung 10 stromab der Venturi-Düse 12 verbunden. Somit herrscht in der ersten Kammer 21 der statische Druck in der Zentralleitung 10 stromauf der Venturi-Düse 12 und in der zweiten Kammer 22 der statische Druck in der Zentralleitung 10 stromab der Venturi-Düse 12. Die erste Kammer 21 und die zweite Kammer 22 sind durch einen federbelasteten Stempel 25 oder eine Membran voneinander getrennt, so dass eine Druckdifferenz zwischen den beiden Kammern eine Auslenkung des Stempels 25 oder der Membran bewirkt. Die Auslenkung lässt sich über einen nicht näher dargestellten Signalgeber in ein vorzugsweise elektrisches Signal umwandeln, welches über eine Steuerleitung 26 als Eingangsgröße zu einem nachfolgend erläuterten Steuergerät 11 transferierbar ist. In einem modifizierten Ausführungsbeispiel ist anstelle des Drucksensors 20 oder ergänzend zum Drucksensor 20 eine weitere Sensorvorrichtung zur Überwachung einer weiteren Messgröße vorgesehen. Die weitere Sensorvorrichtung kann in einer beliebigen Zuleitung oder in der Zentralleitung der Konditioniervorrichtung angeordnet sein. Es werden bevorzugt Größen überwacht, mit deren Hilfe sich eine Verunreinigung oder Verstopfung der Dosiervorrichtung 1 feststellen lässt, beispielsweise wird ein Durchfluss kontinuierlich erfasst.

Eine der Dosiervorrichtung 1 zugeordnete Abgabevorrichtung 3 umfasst eine Abgabeleitung 30 und eine Einspritzdüse 31. Über die Abgabeleitung 30 sind die in der Konditioniervorrichtung 2 aufbereiteten Medien zur Einspritzdüse 31 transportierbar. Die Einspritzdüse 31 ist innerhalb einer nicht näher dargestellten Abgasleitung angeordnet und ermöglicht eine Abgabe des aufbereiteten Mediums in einen Abgasstrom der Brennkraftmaschine.

Über ein Steuergerät 11 sind das erste Dosierelement 5, das zweite Dosierelement 7 und das dritte Dosierelement 9 ansteuerbar. Als Eingangsgrößen sind im Steuergerät 11 bevorzugt das Signal aus dem Drucksensor 20 sowie weitere Kennwerte aus einem Motorsteuergerät vorgesehen, beispielsweise Betriebsdauer, Lastzustand oder Temperatur der Brennkraftmaschine. Mit Hilfe des Steuergeräts 11 ist eine Zufuhr der Harnstoff-Wasser-Lösung HWL, der Luft und des Lösungsmittels zur Konditioniervorrichtung 2 in Abhängigkeit von einem Betriebszustand der Brennkraftmaschine, der Abgasanlage und/oder der Dosiervorrichtung einstellbar.

Unter normalen Betriebsbedingungen wird eine Harnstoff-Wasser-Lösung HWL bevorzugt als aerosolartiges Gemisch in die Abgasanlage der Brennkraftmaschine eingebracht. Zur Erzeugung eines solchen Gemischs werden das erste Dosierventil 5 und das zweite Dosierventil 7 geöffnet, so dass Harnstoff-Wasser-Lösung HWL und Luft kontinuierlich der Konditioniervorrichtung 2 zugeführt werden. An der Einmündungsstelle 13 der ersten Zuleitung 4 in die Zentralleitung 10 wird die Harnstoff-Wasser-Lösung HWL in die Luftströmung eingebracht, wobei ein fein verteiltes Aerosol aus Luft und Harnstoff-Wasser-Lösung HWL entsteht. Mit Hilfe der Venturi-Düse 12 ist gewährleistet, dass die Zentralleitung 10 stromauf der Venturi-Düse 12 weitgehend frei von Bestandteilen der Harnstoff-Wasser-Lösung HWL bleibt. Die durch die Venturi-Düse 12 verursachten Turbulenzen bewirken ferner eine feinere Zerstäubung der stromab eingeleiteten Harnstoff-Wasser-Lösung HWL. Das Aerosol wird in der Abgabeleitung 30 zur Einspritzdüse 31 weitergeleitet und dort in die Abgasanlage eingespritzt.

Bei der Dosierung der Harnstoff-Wasser-Lösung HWL besteht die Gefahr einer Auskristallisierung von Harnstoff und einer damit verbundenen Bildung von Ablagerungen an den Wandungen der durchströmten Leitungen. Harnstoffablagerungen führen zu einer Verringerung des durchströmten Querschnitts und damit zu einem vergrößerten Strömungswiderstand. Dabei ist die Venturi-Düse 12 aufgrund der hier auftretenden Verwirbelungen und des niedrigen statischen Drucks in der Strömung besonders gefährdet. Im Extremfall kann die Venturi-Düse 12 durch Harnstoffablagerungen vollkommen verstopft sein, so dass die Luftströmung in der Zentralleitung 10 zum Erliegen kommt.

In einem bevorzugten Verfahren zum Betrieb der Dosiervorrichtung 1 wird der Konditioniervorrichtung 2 daher bedarfsgerecht ein Lösungsmittel zugeführt, in dem sich Harnstoff lösen lässt. Dazu wird in einem ersten Verfahrensschritt fortlaufend die Druckdifferenz in der Zentralleitung 10 zwischen dem eingangsseitigen Ende und dem ausgangsseitigen Ende der Venturi-Düse 12 mit Hilfe des Drucksensors 20 überwacht. Die gemessenen Werte werden über die Steuerleitung 26 an das Steuergerät 11 übermittelt, wo sie mit einem gegebenenfalls betriebszustandsabhängigen Referenzwert verglichen werden. Referenzwerte für die Druckdifferenz können beispielsweise in Form von Kennfeldern im Steuergerät 11 hinterlegt sein. Eine Abweichung der gemessenen Werte von dem Referenzwert um mehr als einen vorgegebenen Betrag deutet auf eine Verunreinigung der Venturi-Düse 12 durch Harnstoffablagerungen hin. In diesem Fall wird in einem nachfolgenden Verfahrensschritt die Zufuhr der Harnstoff-Wasser-Lösung HWL und der Luft über das erste Dosierelement 5 und das zweite Dosierelement 7 unterbrochen, und das dritte Dosierelement 9 wird geöffnet. Die Harnstoffablagerungen werden in dem Lösungsmittel gelöst und mit dem Lösungsmittelstrom ausgespült. Vorzugsweise wird in einem weiteren, nachfolgenden Verfahrensschritt die Zufuhr des Lösungsmittels nach einer vorgegebenen Zeitdauer wieder unterbrochen, und die Zufuhr der Harnstoff-Wasser-Lösung HWL sowie der Luft wird aktiviert. Wird über den Drucksensor 20 weiterhin eine erhöhte Druckdifferenz über die Venturi-Düse 12 hinweg festgestellt, kann das Verfahren wiederholt werden.

In einem modifizierten Betriebsverfahren wird das zweite Rückschlagventil 18 als Sensorvorrichtung genutzt, um einen Luftdurchfluss durch die zweite Zuleitung 6 zu überwachen. Harnstoffablagerungen in der zweiten Zuleitung 6 oder in der Zentralleitung 10 bewirken einen gesteigerten Strömungswiderstand und damit einen verringerten Luftdurchfluss. Damit ändert sich auch eine Auslenkung eines Ventilkörpers des federbelasteten zweiten Rückschlagventils 18. Über einen nicht näher dargestellten Signalgeber wird die Auslenkung des Ventilkörpers in ein vorzugsweise elektrisches Signal umgewandelt, das über eine weitere Steuerleitung 27 an das Steuergerät 11 übermittelt wird. Im Steuergerät 11 wird das Signal mit einem Referenzwert unter normalen Betriebsbedingungen verglichen. Bei einer Abweichung um mehr als ein vorgegebenes Maß oder bei einer Erreichung eines vorgegebenen Schwellenwerts wird die Zufuhr des Lösungsmittels aktiviert. In einem weiter modifizierten Betriebsverfahren kann in analoger Weise auch das erste Rückschlagventil 17 als Sensorvorrichtung genutzt werden, um den Durchfluss der Harnstoff-Wasser-Lösung HWL durch die erste Zuleitung 4 zu überwachen.

In einem weiteren, modifizierten Betriebsverfahren wird auch die erste Zuleitung 4 mit Hilfe der Luft, des Lösungsmittels oder einer Kombination aus diesen beiden Medien von Bestandteilen der Harnstoff-Wasser-Lösung HWL gereinigt. Dieses Betriebsverfahren ist insbesondere für Dosiervorrichtungen geeignet, bei denen eine Rückströmung von Medien aus der Zentralleitung 10 in die erste Zuleitung 4 ermöglicht ist. In einem Verfahrensschritt wird die Zufuhr der Harnstoff-Wasser-Lösung HWL unterbrochen, beispielsweise indem eine Fördereinheit stromfrei geschaltet wird. In einem nachfolgenden Verfahrensschritt wird das erste Dosierelement 5 geöffnet, um einen Druckausgleich zwischen der ersten Zuleitung 4 und der Zentralleitung 10 herbeizuführen. Anschließend wird in einem nachfolgenden Verfahrensschritt das dritte Dosierelement 9 geöffnet, um Lösungsmittel der Zentralleitung 10 zuzuführen. Von der Zentralleitung 10 aus wird das Lösungsmittel in die erste Zuleitung 4 eingeleitet und dadurch die erste Zuleitung 4 von Bestandteilen der Harnstoff-Wasser-Lösung HWL gereinigt. Nach der Reinigung der ersten Zuleitung 4 mit Hilfe des Lösungsmittels wird die Zufuhr des Lösungsmittels über das dritte Dosierelement 9 wieder unterbrochen. Optional kann anschließend das zweite Dosierelement geöffnet werden und Luft in die Zentralleitung und nachfolgend in die erste Zuleitung 4 eingeleitet werden. Dieses Verfahren ermöglicht es insbesondere, die erste Zuleitung 4 nach einem Abstellen der Brennkraftmaschine zu reinigen und optional mit Luft zu füllen, wodurch beispielsweise ein Einfrieren der Harnstoff-Wasser-Lösung HWL in der ersten Zuleitung 4 bei niedrigen Temperaturen verhindert wird.

In einem weiteren, modifizierten Betriebsverfahren erfolgt die Zufuhr des Lösungsmittels in Abhängigkeit von einem Betriebszustand der Brennkraftmaschine, beispielsweise nach Abstellen der Brennkraftmaschine oder in einer längeren Niedriglastphase. Dazu wird in einem ersten Verfahrensschritt die Zufuhr der Harnstoff-Wasser-Lösung HWL über das erste Dosierelement 5 unterbrochen. In einem nachfolgenden Verfahrensschritt wird das zweite Dosierelement 7 geöffnet und Luft in die Konditioniervorrichtung 2 eingeleitet. Durch die Zufuhr von Luft wird die Harnstoff-Wasser-Lösung HWL aus der Zentralleitung 10 und der Abgabeleitung 31 ausgeblasen. Nach einem festgelegten Zeitintervall von beispielsweise dreißig Sekunden, wird die Luftzufuhr über das zweite Dosierelement 7 unterbrochen. In einem weiteren Verfahrensschritt wird das dritte Dosierelement 9 geöffnet und das Lösungsmittel in die Konditioniervorrichtung 2 eingeleitet. Durch das Lösungsmittel werden Harnstoffablagerungen, die sich innerhalb der im Normalbetrieb vom Aerosol durchströmten Leitungsteile gebildet haben können, gelöst und aus der Dosiervorrichtung 1 ausgespült. Nach einem weiteren Zeitintervall von beispielsweise fünfzehn Sekunden, wird die Zufuhr des Lösungsmittels über das dritte Dosierelement 9 unterbrochen. Für eine optimale Reinigungswirkung werden die beschriebenen Verfahrensschritte vorteilhafterweise mehrfach wiederholt. Dieses Verfahren ist besonders vorteilhaft präventiv einsetzbar, bevor sich größere Harnstoffablagerungen in den Leitungen gebildet haben.

Bei einer Verwendung der erfindungsgemäßen Dosiervorrichtung 1 in einer Brennkraftmaschine eines Kraftfahrzeugs kann als Lösungsmittel auch ein Reinigungsmittel aus einer Scheibenwaschanlage oder einer Scheinwerferwaschanlage verwendet werden. Dazu ist es vorteilhaft, das dritte Dosierelement 9 wie in der Figur dargestellt als 3/3-Wegeventil 9 auszugestalten. In einer ersten Arbeitsposition des 3/3-Wegeventils ist das Lösungsmittel aus dem Lösungsmittelvorratsbehälter 15 über die dritte Zuleitung 8 zur Zentralleitung 10 transportierbar. In einer zweiten Arbeitsposition ist eine Zufuhr des Lösungsmittels zur Konditioniervorrichtung unterbunden. In einer dritten Arbeitsposition ist das Lösungsmittel aus dem Lösungsmittelvorratsbehälter 15 in eine Reinigungsleitung 40 einleitbar, die wiederum mit einer nicht näher dargestellten Scheibenwaschanlage oder Scheinwerferreinigungsanlage verbunden ist. Über eine entsprechende Ansteuerung des 3/3-Wegeventils durch das Steuergerät 11 kann das Reinigungsmittel bedarfsgerecht der Scheibenwaschanlage und/oder der Dosiervorrichtung zugeführt werden. Ohne den Rahmen der Erfindung zu verlassen, können auch weitere Arbeitspositionen des dritten Dosierelements 9 vorgesehen sein, in denen beispielsweise das Lösungsmittel gleichzeitig in die Reinigungsleitung 40 und in die dritte Zuleitung 8 einleitbar ist. Ebenso können auch Zwischenpositionen zwischen den beschriebenen Arbeitspositionen vorgesehen sein. Ferner kann eine weitere Arbeitsposition vorgesehen sein, in der die dritte Zuleitung 8 mit einer in der Figur nicht dargestellten Ausleitung in die Umgebung verbunden ist. Diese Arbeitsposition ermöglicht insbesondere einen Druckabbau eines eventuell in der dritten Zuleitung 8 anliegenden Überdrucks.

In dem beschriebenen Ausführungsbeispiel wird das zu dosierende Medium in der Konditioniervorrichtung 2 zu einem Aerosol aufbereitet und über die Abgabevorrichtung 3 der Abgasanlage zugeführt. Es ist allerdings ebenso vorstellbar, das zu dosierende Medium der Abgasanlage in reiner Form zuzuführen, also ohne Vermischung mit einem weiteren Medium in der Konditioniervorrichtung. Ebenso kann in der Konditioniervorrichtung 2 eine Gemischbildung aus zweitem und drittem Medium vorgesehen sein.

## Patentansprüche

1. Dosiervorrichtung zur dosierten Abgabe eines ersten Mediums in eine Abgasanlage einer Brennkraftmaschine, mit
- einer Konditioniervorrichtung (2) mit einer Zentralleitung, der das erste Medium (HWL) und ein zweites sowie ein drittes Medium zuführbar sind, und einer Abgabevorrichtung (3), die mit der Konditioniervorrichtung (2) verbunden ist und über die das erste Medium (HWL) und/oder das zweite Medium in die Abgasanlage einleitbar sind,
wobei
- durch das zweite und das dritte Medium eine Reinigung der Konditioniervorrichtung (2) und/oder der Abgabevorrichtung (3) von Bestandteilen des ersten Mediums (HWL) ermöglicht ist, und das dritte Medium sich von dem zweiten Medium in seinen physikalischen und/oder seiner chemischen Zusammensetzung unterscheidet,
**dadurch gekennzeichnet, dass**
in der Zentralleitung (10) der Konditioniervorrichtung (2) ein Dosierelement (12) zur Beeinflussung einer Strömungsgröße eines die Zentralleitung (10) durchströmenden Mediums oder Mediumgemisches angeordnet ist und dass die Zufuhr des dritten Mediums stromauf des Dosierelements (12) vorgesehen ist, wobei in der Zentralleitung (10) der Konditioniervorrichtung (2) eine Sensorvorrichtung (20) für eine mit einem Verschmutzungsgrad der Dosiervorrichtung korrelierende Messgröße angeordnet ist.

2. Dosiervorrichtung nach Anspruch 1,
**dadurch gekennzeichnet, dass**
als zweites Medium Luft vorgesehen ist und als drittes Medium ein Lösungsmittel vorgesehen ist, in dem zumindest Bestandteile des ersten Mediums (HWL) lösbar sind.

3. Dosiervorrichtung nach Anspruch 1 oder 2,
**dadurch gekennzeichnet, dass**
in der Konditioniervorrichtung (2) eine Gemischbildung aus erstem Medium und zweitem oder drittem Medium erfolgt.

4. Dosiervorrichtung nach einem der Ansprüche 1 bis 3,
**dadurch gekennzeichnet, dass**
das Dosierelement (12) als Diffusor oder Venturi-Düse ausgestaltet ist.

5. Verfahren zum Betrieb einer Dosiervorrichtung nach einem der Ansprüche 1 bis 4, **dadurch gekennzeichnet, dass**
die mit dem Verschmutzungsgrad der Dosiervorrichtung korrelierende Messgröße der Sensorvorrichtung (20) überwacht und bei einer Veränderung gegenüber einem Referenzwert um ein vorgebbares Maß oder bei einer Erreichung eines vorgegebenen Schwellenwertes die Zufuhr des dritten Mediums vorgenommen wird.

6. Verfahren nach Anspruch 5,
**dadurch gekennzeichnet, dass**
die Zufuhr des zweiten Mediums und die Zufuhr des dritten Mediums abwechselnd innerhalb eines vorgebbaren Zeitraums vorgenommen wird.

7. Verfahren nach Anspruch 5 oder 6,
**dadurch gekennzeichnet, dass**
während der Zufuhr des zweiten Mediums und/oder des dritten Mediums eine Zufuhr des ersten Mediums (HWL) reduziert ist.

## Claims

1. Metering apparatus for the metered dispensation of a first medium into an exhaust system of an internal combustion engine, comprising
- a conditioning device (2) with a central line to which the first medium (UWS) and a second and a third medium can be supplied and a dispensing device (3) connected to the conditioning device (2), by way of which the first medium (UWS) and/or the second medium can be introduced into the exhaust system,
wherein
- components of the first medium (UWS) can be cleared from the conditioning device (2) and/or from the dispensing device (3) by means of the second and the third medium and wherein the third medium differs from the second medium in its physical and/or chemical composition,
**characterised in that**
a metering element (12) is provided in the central line (10) of the conditioning device (2) to influence a flow value of a medium or medium mixture flowing through the central line (10), and **in that** the third medium is supplied upstream of the metering element (12), a sensor device (20) being provided in the central line (10) of the conditioning device (2) for a measuring variable correlating with the degree of contamination of the metering apparatus.

2. Metering apparatus according to claim 1,
**characterised in that**
air is provided as a second medium and the third medium is a solvent in which at least components of the first medium (UWS) are soluble.

3. Metering apparatus according to claim 1 or 2,
**characterised in that**
a mixture of the first medium and the second or third medium is formed in the conditioning device (2)

4. Metering apparatus according to any of claims 1 to 3,
**characterised in that**
the metering device (12) is designed as a diffuser or a venturi tube.

5. Method for operating a metering apparatus according to any of claims 1 to 4,
**characterised in that**
the measuring variable of the sensor device (20) which correlates with the degree of contamination of the metering apparatus is monitored and the third medium is supplied if there is any change from a reference value by a presettable amount or if a preset threshold value is reached.

6. Method according to claim 5,
**characterised in that**
the second and the third medium are supplied alternately within a presettable period of time.

7. Method according to claim 5 or 6,
**characterised in that**
the supply of the first medium (UWS) is reduced while the second medium and/or the third medium is/are supplied.

## Revendications

1. Dispositif de dosage qui délivre de manière dosée un premier fluide dans une installation de gaz d'échappement d'un moteur à combustion interne
- et qui présente un dispositif de conditionnement (2) avec une conduite centrale à laquelle le premier fluide (HWL) et un deuxième fluide ainsi qu'un troisième fluide peuvent être apportés, et un dispositif de libération (3) qui est relié au dispositif de conditionnement (2) et par lequel le premier fluide (HWL) et / ou le deuxième fluide peuvent être injectés dans l'installation de gaz d'échappement,
- le deuxième et le troisième fluides permettant un nettoyage du dispositif de conditionnement (2) et / ou du dispositif de libération (3) des composants du premier fluide (HWL), et le troisième fluide différant du deuxième fluide par sa composition physique et / ou chimique, **caractérisé en ce qu'**un élément doseur (12), qui permet d'influencer un débit d'un fluide ou d'un mélange de fluide traversant la conduite centrale (10), est disposé dans la conduite centrale (10) du dispositif de conditionnement (2) et **en ce que** l'amenée du troisième fluide est prévue en amont de l'élément doseur (12), un dispositif capteur (20) étant disposé dans la conduite centrale (10) du dispositif de conditionnement (2) pour une grandeur en corrélation avec un degré de saleté du dispositif de dosage.

2. Dispositif de dosage selon la revendication 1, **caractérisé en ce que** de l'air est prévu comme deuxième fluide et un solvant est prévu comme troisième fluide, dans lequel au moins les composants du premier fluide (HWL) sont solubles.

3. Dispositif de dosage selon la revendication 1 ou 2, **caractérisé en ce qu'**une formation du mélange du premier fluide et du deuxième ou troisième fluide a lieu dans le dispositif de conditionnement (2).

4. Dispositif de dosage selon l'une des revendications 1 à 3, **caractérisé en ce que** l'élément doseur (12) est conçu comme un diffuseur ou un tube de Venturi.

5. Procédé permettant de faire fonctionner un dispositif de dosage selon l'une des revendications 1 à 4, **caractérisé en ce que** la grandeur du dispositif capteur (20) en corrélation avec le degré de saleté du dispositif de dosage est contrôlée et lors d'une modification d'une valeur déterminée par rapport à une valeur de référence ou lorsqu'une valeur seuil définie est atteinte, l'amenée du troisième fluide est effectuée.

6. Procédé selon la revendication 5, **caractérisé en ce que** l'amenée du deuxième fluide et celle du troisième fluide est effectuée tour à tour sur une durée déterminée.

7. Procédé selon la revendication 5 ou 6, **caractérisé en ce que** pendant l'amenée du deuxième fluide et / ou du troisième fluide, une amenée du premier fluide (HWL) est réduite.
